Europäisches Patentamt

European Patent Office

Office européen des brevets

(19)

(11) Publication number: **0 070 943**

**A1**

(12) **EUROPEAN PATENT APPLICATION**

(21) Application number: 81401249.8

(22) Date of filing: 31.07.81

(51) Int. Cl.³: **G 01 V 5/06**

(43) Date of publication of application:
09.02.83 Bulletin 83/6

(84) Designated Contracting States:
DE FR GB IT NL

(71) Applicant: SOCIETE DE PROSPECTION ELECTRIQUE
SCHLUMBERGER
42, rue Saint-Dominique
F-75340 Paris Cedex 07(FR)

(84) Designated Contracting States:
FR IT

(71) Applicant: Schlumberger Limited
277 Park Avenue
New York, N.Y. 10172(US)

(84) Designated Contracting States:
DE GB NL

(72) Inventor: Ruckebusch, Guy
36 Shields Lane
Ridgefield Connecticut 06877(US)

(74) Representative: Hagel, Francis et al,
Service Brevets ETUDES ET PRODUCTIONS
SCHLUMBERGER B.P. 202
F-92142 Clamart Cedex(FR)

(54) Natural gamma ray spectrum analysis and filtering technique.

(57) In accordance with an illustrative embodiment of the present invention, a method and apparatus is disclosed for determining the content of a selected number of materials in an earth formation penetrated by a borehole from the spectrum of gamma radiation emitted by the materials in the formation. By deriving representations of portions of the detected gamma radiation spectrum and combining the representations, the content of the selected materials is determined. A special filter arrangement provides for an improvement in such a determination by effecting a reduction of an anti-correlation relationship between the determined contents of materials having closely related spectra. This reduction is achieved without sacrificing the resolution of the measurements along the borehole.

./...

EP 0 070 943 A1

FIG.1

## BACKGROUND OF THE INVENTION

### FIELD OF THE INVENTION

The present invention is concerned with detecting and identifying the content of materials present in an earth formation penetrated by a borehole and, more particularly, a method and apparatus for analyzing a detected spectrum of naturally emitted gamma radiation to determine the content of a selected number of naturally radioactive materials.

### Description of the Prior Art

The potential usefulness of being able to measure individually the contributions of the primary sources of natural radiation has been recognized for many years. Such information can, to cite a few instances, be useful in well-to-well correlation, in the study and evaluation of sedimentary basins, in the quantitative measurement of radioactive techniques, such as neutron activation, to obtain in situ elemental analysis.

An early technique for the location of mineral deposits that finds general utility in distinguishing between geological formations and in locating discontinuities in the earth's crust is described in U.S. Patent No. 2,749,446, issued June 5, 1956 to Herzog. Simply put, Herzog discloses that it is possible to distinguish between geological formations by recording the detected gamma ray spectrum. The recorded spectrum, according to Hertzog, may either be an instantaneous record giving frequency and amplitude information or a time averaged value, although the latter format could prevent the observer from distinguishing between formations. Little constituent identification may be accomplished, however, in formations having more than one radioactive material.

In a later form of natural gamma ray well logging, the counting rates of gamma rays detected in three channels or spectra centered on the 1.46 MeV Potassium, the 1.76 MeV Uranium, and the 2.62 MeV Thorium energies are collected to determine the count contributions and thereby the content of the individual materials relative to the total count rate. The individual channel or spectrum widths were set at +/- 10 percent of the energy value for the particular peak.

Such techniques, while an improvement over the prior methods, still tend to have a rather low statistical accuracy and a relatively high systematic error in evaluating the Potassium, Uranium and Thorium contents of the formation. The detected gamma ray spectrum at any single energy includes a contribution from all of the radioactive materials in the formation, and to rely on a single relatively narrow peak for information as to a selected material, results in ignoring a significant amount of the total information available in the detected gamma ray spectrum.

The derivation of information concerning the content of selected materials in a formation, depends upon accurate constituent analysis of the formation gamma ray spectra. An important and basic technique for performing such analysis is disclosed in U.S. Patent No. 3,521,064 to J. Moran. In accordance with the disclosure of that patent, a detected gamma ray energy spectrum for a formation of unknown composition is compared with a composite spectrum made up of weighted standard spectra of the constituents postulated to comprise the formation. The weight coefficients for the standard spectra which give the best fit of the composite spectrum to the unknown spectrum, as determined, for example, by the method of least squares, represent the relative proportions of the consituents in the formation. By appropriate selection of the standard spectra, the proportions of the constituents of interest may be obtained.

In yet another technique, described in U.S. patent No. 3,976,878 to Chevalier et al, for determining a formation's content in the elements Thorium (Th), Uranium (U) and Potassium (K), the gamma ray energy spectrum is divided into a number of contiguous bands. Three of the bands contain selected energy peaks of a respective one of those elements, while the other bands contains other portions of the detected spectrum. The formation content of each element is then determined by a weighted combination of the detected counts in the respective bands. In this manner statistical accuracy was improved in that portions of the detected gamma ray spectrum containing relevant information were not ignored. This statistical accuracy, however, was obtained at the expense of increasing the effect of an anti-correlation relationship which exists between the determined contents of materials having closely related spectra, e.g., Thorium and Uranium. More specifically, this effect is believed due to the broad similarity of the spectra of these two elements at energies less than 1600 Kev, which similarity causes considerable practical difficulty in separating these two elements.

<center>SUMMARY OF THE INVENTION</center>

It is, therefore, an object of the present invention to provide a method and apparatus for determining the content of a selected number of radioactive materials, wether such radioactivity is naturally occuring or induced, in an earth formation penetrated by a borehole that offer a superior accuracy than the prior art techniques while simultaneously effecting a reduction of the anti-correlation relationship existing between the determined contents of the materials.

It is a further object of the present invention to provide a method and apparatus for easily and conveniently determining the constituent proportions of the materials, with improved accuracy, from the spectrum of natural or induced gamma radiation emitted by the materials in the formation without sacrificing the resolution of the measurement along the borehole.

There is provided, therefore, in accordance with principles of the present invention, a method and apparatus for determining the content of a selected number of radioactive materials in an earth formation of interest. The contents are determined from the spectrum of gamma radiation emitted by the materials by deriving representations of portions of the detected gamma radiation spectrum and combining the representaions to determine therefrom the contents of the selected materials.

In further accordance with principles of the present invention, a filtering arrangement is provided whereby the content of each of the selected number of radioactive materials in the earth formation of interest traversed by the borehole can be determined with reduced statistical variations while maintaining adequate resolution of the changes in such content along the borehole.

In further accordance with principles of the present invention, the processing employed to determine the aforesaid content of each of the selected radioactive materials includes an adaptive filter having filter parameters which are determined from an estimation of the underlying noise statistics estimated from a model of the earth formations which includes several assumptions. The first of these assumptions is, that along the borehole, the formations can be seperated into homogeneous zones seperated by non-homogeneous or transition zones. For processing the signals derived in the homogeneous zones, the filter parameters are chosen such as to impose a continuity or "small variance" constraint on the determined content of the radioactive materials at different levels in the zone to reduce the anti-correlation relationship between the Thorium and Uranium contents. In transition zones, the filter parameters are chosen such as to maintain adequate resolution of the changes in the content of the radioactive materials along the borehole. While the proposed filtering arrangement has the effect of reducing the aforementioned shortcomings of the prior art processing techniques it has the additional effect of considerably increasing the contrast of the log representations of the determined formation content of the radioactive materials.

Yet in further accordance with principles of the present invention, the determination of homogenous and transition zones is accomplished by means of a technique employing the total gamma ray count measured in the spectrum. In accordance with such a technique, the total measured count is subjected to a filtering operation so as to obtain a signal representative of the derivative "rate of change" of the total measured count. Thereafter, at each level in the borehole, whether the derivative signal satisfies a certain set of relationships relative to the derivative signals obtained for the adjacent levels or not determines the selection of the appropriate filter parameters, i.e., the parameters applicable in homogeneous or transition zones.

Yet in further accordance with principles of the present invention, the content of the radioactive materials along the borehole at any one level is presumed to be related to the content of the radioactive materials at an adjacent level and a zero-means Gaussian white noise. The covariance of the white noise is additionally presumed to be relatively small in homogeneous zones and relatively large in transition zones. For homogeneous zones, however, care is taken that this covariance does not end up being so small such as to mask any slow gradual changes in the content of a radioactive material from one level to the next. In addition, the assumed Gaussian probability distribution is further limited by the constraint that the resultant determination of the content of a radioactive material not be negative. While it may seem quite logical to adopt such a constraint, it will be made clearer further on that an advantage thereof is that the linearity of the proposed filtering process is maintained with little loss of accuracy.

The actual content of the radioative materials along the borehole at any one level, is further presumed to be related to the "observed" content and yet another independent zero-means Gaussian white noise. The difference between the observed and the actual content being a function of the statistics of the measurement. By choosing a minimum variance error criterion one may provide for a "best-estimate" determination of the content of the radioactive materials from the observed content. This "best estimate" content can be more easily determined, in accordance with principles of the present invention, by employing a fixed-lag smoothing estimate. The content of the radioactive material can then be determined by a recursive processing technique to determine the estimates that satisfy the minimum variance error estimate.

Yet in further accordance with principles of the present invention, in order to considerably reduce the processing time necessary for the determination of the content of the materials, a sequential processing technique is proposed. The principal advantage of the sequential processing technique is that by processing the measurement sequence one component at a time a measurement update equation may be divided into five iterations. This reduces the vector quantity associated with the covariance of the white noise between adjacent levels to a scalar.

Yet in further accordance with principles of the present invention, the content of the radioactive materials along the borehole at any one level is presumed to be related to the content of the radioactive materials at an adjacent level and a quantity $A_n$ (a slowly varying 3 dimensional random sequence). This quantity $A_n$ is taken as constant if ratios of the content of certain of the materials are constant in the formation interval investigated which indicates a given sedimentological process. The given sedimentological process, e.g., certain types of clays, can be determined bo other logging methods.

For purposes of illustrations, a preferred embodiment according to the present invention useful for logging the natural gamma ray activity in earth formations surrounding a borehole includes means for detecting the natural gamma rays and means for classifying the detected rays according to their respective energy ranges, means for transmitting classified signals to the surface and means for computing from the counting rate in each energy range the content of the radioactive materials in the formation. A special filter arrangement provides for an improvement in the determination of the content of the selected materials. Advantageously, recording means will be included so that the information may be graphically recorded on a base that can be correlated with the depth of the investigating device as it advances through the borehole.

## BRIEF DESCRIPTION OF THE DRAWINGS

In the accompanying drawing :

Fig. 1 is a schematic view of an embodiment of logging apparatus constructed in accordance with the preent invention; and

Fig. 2 is a simplified block diagram of the relevant steps in the operation of the apparatus of Fig. 1 .

## DETAILED DESCRIPTION OF A PREFERED EMBODIMENT

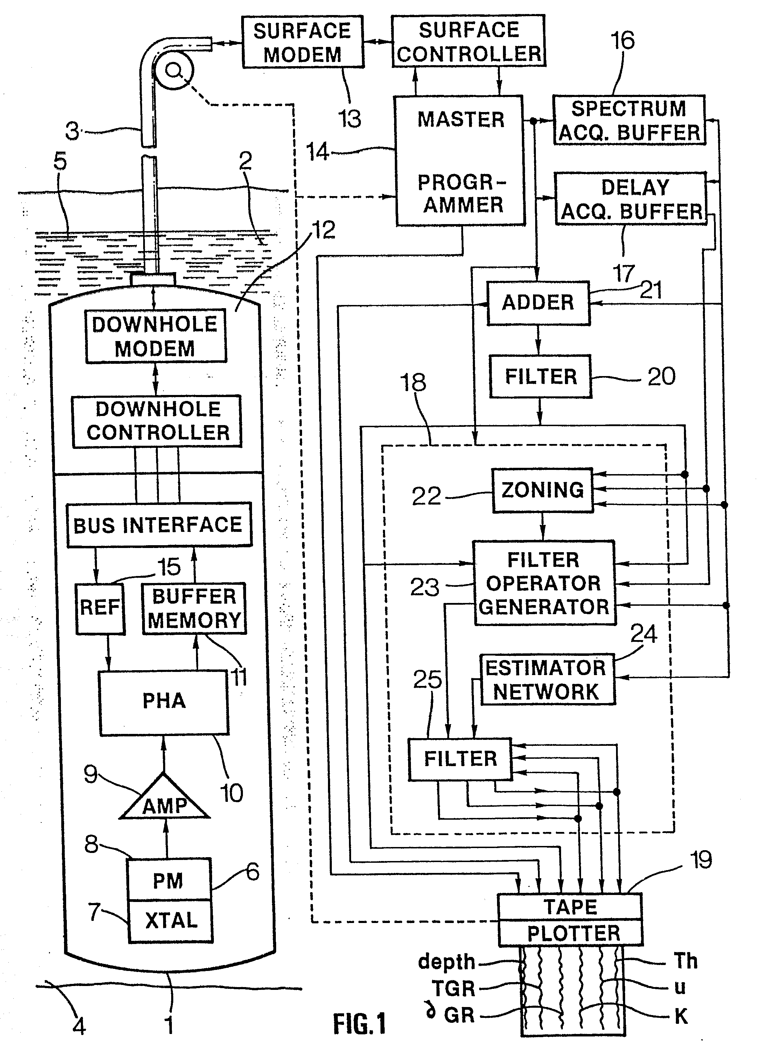

In the Fig.1, of the drawings, a representative embodiment of the invention includes a fluid-tight, pressure and temperature resistant well tool or sonde 1 that is adapted to be suspended in a well bore 2 by an armored cable 3 for investigating a subsurface earth formation 4. The well bore 2 is illustrated as containing a well fluid 5. Although no casing is shown in the well bore, it will be understood that the invention has application to cased hole logging as well. The sonde 1 includes, for purposes of illustration, a radiation detector 6 which may be of any construction appropriate to the detection, illustratively, of natural gamma rays and to the production of a pulse signal in response to each detected gamma ray. The pulse signal's amplitude being representative of the energy of the detected gamma ray. Generally, such a detector includes a scintillation crystal 7 which is opticaly coupled to a photomultiplier tube 8. The crystal is preferably of the thallium-activated sodium iodide type, though other suitable crystal types such as thallium sodium-activated cesium iodide, may be used. Alternatively, a solid state detector, having for example a germanium crystal, might be employed.

Electrical power for the sonde 1 is supplied through the cable 3 from a source of power (not shown) at the surface. Suitable power source (not shown) are also included in the sonde 1 for the purpose of driving the detector 6 and other downhole electronics.

An amplifier 9 acts on the output pulses from the photomultiplier 8 and the amplified photomultiplier pulses are thereafter applied to a pulse height analyzer (PHA) 10, which may be of any conventional type such as a single ramp (Wilkinson rundown) type. It will be understood to include the usual pulse height discriminators, for selection of the gamma ray energy range to be analyzed, and linear gating circuts, for control of the time portion of the detector pulses to be analyzed.

PHA 10 segregates the detector pulses into predetermined channels, e.g., five channels or windows according to their amplitude and supplies signals in suitable digital form representing the amplitude of each analyzed pulse. The digital outputs of PHA 10 are stored in a buffer memory 11 and then transferred through a bus interface to telemetring and cable interface circuits 12 comprised of a downhole controller and a downhole modem, for transmission over cable 3 to the surface. At the surface, the cable signals are received by cable interface circuits 13 cpmprising an surface controller and surface modem. It will be understood that the circuits 12 and 13 may be of any suitable known construction for encoding and decoding, multiplexing and demultiplexing, amplifying and otherwise processing the signals for transmission to and reception by the surface or uphole electronics. Appropriate circuits for borehole data transmission are described, for example, in French Patent No. 2,379,694 entitled "Système de Transmission de Données pour Puits de Forages" by Belaigues et al.

The operation of the sonde 1 is controlled by signals sent downhole by a master programer 14 located at the surface. These signals are received by a reference 15 which, in response thereto, transmits control signals to the PHA 10 to provide the capability of enabling the linear gating circuits of the PHA 10 during different time intervals. Data provided by PHA 10 is thereafter sent to the surface where the counts in each of the five channels are generated by respective portions of a data acquisition buffer 16. This operation is undertaken under the control of the master programer 14, which corables buffer 16 to accumulate te appropropriate counts-per-channel signals from the cable interface circuits 13.

Following accumulation in the acquisition buffer 16, the counts in each of the five channels or windows are transferred both directly and indirectly, through a delay buffer 17, to respective storage buffers (not shown) in a circuit arrangement 18. The circuit arrangement 18 may comprise a general purpose digital computer, such as the PDP-11 computer manufactured by the Digital Equipment Corporation, Maynard. It will be understood that the circuit arrangement 18 is suitably contructed to perform the constituent proportions determining functions described in the aforementioned U.S. 3,976,878. In addition, the circuit arrangement 18 includes circuits capable of carrying out in accordance with the invention, certain processing and filtering steps as described hereinafter. The system of the present invention further includes a recorder 19 comprising conventional visual and magnetic tape components for making the customary record of logging signals as a function of depth. Illustratively, a cable-following mechanical linkage (shown in dashed lines) for driving the recorder 19 in synchronism with the cable 3 is provided for this purpose. Advantageously, the linkage is also coupled, through suitable means, to the signal processing and cable interface circuits 13 so that a more accurate indication of depth, e.g., one that takes into account factors such as cable stretch, may be derived. Certain output signals from the signal processing and cable interface circuits 13 may also be recorded directly on tape in the manner indicated in the drawing for further processing and review.

In order to better understand the principles of the present invention as represented in the accompanying drawings, some of the processes that carry out the present invention as related to the operations of circuit arrangement 18 will be presently examined in some detail.

One may safely assume that the model of the formation is a bottom-to-top sequence of half-foot thick layers with uniform Th, U, K concentrations. Let $X_n$ be the 3-dimensional vector describing the Th, U, K concentrations at the $n^{th}$ depth in the borehole.

Let $\Delta t_n$ denote the time the tool takes to run the $n^{th}$ interval. If i designates one of the five windows, let $N_n$ denote the total number of counts detected in the $i^{th}$ window during $\Delta t_n$ time. The double-indexed sequence $N_n^i$ may therefore be characterized by a realization of independent Poisson variables. The count rate for the $n^{th}$ depth and the $i^{th}$ window is therefore given by :

0070943

$$Z_n^i = \frac{N_n^i}{\Delta t_n} . \tag{1}$$

where $Z_n$ denotes the actual number of counts generated in the $i_{th}$ window during $t_n$ time.

Let $N_n$ and $Z_n$ represent the 5-dimensional vectors whose components are $N_n^i$ and respectively $Z_n^i$. Thereinafter the sum of the five components of $Z_n$ will be denoted by $Y_n$ and referred to as the (total) gamma ray.

If $E( )$ designates the mathematical expectation, the sequences $X_n$ and $Z_n$ will be assumed to be related by :

$$E(Z_n) = HX_n , \tag{2}$$

where $H$, the sensitivity matrix, is of (5 x 3) dimension. It is important to notice that equation (2) can only be an engineering approximation for the two following reasons.

Firstly, the sensitivity matrix has been estimated for a standard logging condition which can be quite different from the real one. For this reason, equation (2) should be replaced by :

$$E(Z_n) = H_n X_n . \tag{3}$$

where $H_n$ is a depth-varying matrix.

Secondly, equation (2) is valid only for thick homogeneous formations because it neglects effects due to the length of the detector and the scattering of the gamma photons. Nevertheless that equation will be hereinafter used because the exact expression of the transfer function relating the sequence $X_n$ to the sequence $E(Z_n)$ is not presently known.

Equation (2) may be rewritten in the following form :

$$Z_n = HX_n + V_n , \tag{4}$$

where $V_n$ is a zero-mean independent whose covariance matrix $R_n$ satisfies :

$$R_n - E\left(V_n V_n'\right) - \frac{1}{\Delta t_n}\, \text{diag}\left(H X_n\right). \tag{5}$$

It is important to notice that, when the counts $N_n$ are not too few, $V_n$ is approximately Gaussian from the application of the Central Limit theorem. In this case the measurement equation (4) has the usual form of a signal $Y_n = H X_n$ degraded by an additive zero-mean Gaussian white noise $V_n$.

As can be expected, the first attempts to relate the counts in the windows to the radioactive elements investigated the simplest possible estimates of $X_n$, namely the ones that are a function of $Z_n$ only. In the aforementioned U.S. Patent No. 3,976,878, it was proposed to estimate $X_n$ by minimizing the sum of some square norm of the measurement errors $V_n$ :

$$\sum_n \| Z_n - H X_n \|_1^2 . \tag{6}$$

where the norm in the 5 dimensional space $(R^5)$ was assumed to have the following form :

$$\| x \|_1^2 - \sum_{i=1}^{5} \frac{x_i^2}{\sigma_i^2} \tag{7}$$

for any $x' = (x_1, \ldots, x_5)$.

A measurement matrix M may also be defined as the pseudo-inverse of H corresponding to the chosen norm $\| \ \|_1$.

A conceptual framework to improve the estimates by means of "filtering" or "smoothing" techniques, requires the assumption of an a priori probability distribution for the entire sequence $X_n$. Then to estimate the actual sequence from the sequence $Z_n$. Unfortunately, no obvious model of the Th, U, K distribution is available. In accordance with the present invention to add to the criterion defined in equation (6) a penalty term improves the continuity of the estimate :

$$\sum_n \left( \| Z_n - H X_n \|_1^2 + \| X_{n+1} - X_n \|_2^2 \right) . \tag{8}$$

where $\| \ \|_2$ was an arbitrary norm in $R^3$. As is well known, the best causal estimate $X_n$ belongs to the family of constant Kalman filters of the following form :

$$\dot{X}_{n+1} = \dot{X}_n + K\,(Z_{n+1} - H\dot{X}_n)\,. \tag{9}$$

where $K$, known as the Kalman filter gain, is some $(3 \times 5)$ dimensional matrix which can be computed from the expressions of the norms $\| \ \|_1$ and $\| \ \|_2$.

To overcome the problem of the conflicting requirements of high resolution and noise rejection, a generalization of equation (9) is employed by using the following family of estimates :

$$\dot{X}_{n+1} = \dot{X}_n + K_n\,(Z_{n+1} - H\dot{X}_n)\,, \tag{10}$$

where the gain $K_n$ is "small" (to fight against noise) for a Th, U, K homogeneous zone and "large" (to keep an acceptable resolution) in other zones i.e., the transition zones.

Therefore it may be assumed that :

$$K_n = K_h \qquad \text{if } n \text{ belongs to a homogeneous zone, and} \tag{11}$$

$$K_n = K_t \qquad \text{if } n \text{ belongs to a transition zone,} \tag{12}$$

The gain $K_h$ may be computed to minimize a criterion like that of equation (8), whereas $K_t$ may be taken proportional to the measurement matrix M. Of course $K_h$ and $K_t$ are chosen such that $K_t$ is "much greater" than $K_h$. The detection of homogeneous zones relied an analysis of the total gamma ray level using the following decision rule :

n belongs to a homogeneous zone

$$\text{if } (\nabla \dot{\gamma}_n)^2 \leq 9 \text{ var } (\nabla \dot{\gamma}_n)\,. \tag{13}$$

where $\nabla\hat{\gamma}_n$ is a filtered derivative of the gamma ray :

$$\nabla\hat{\gamma}_n = 2\gamma_{n+2} + \gamma_{n+1} - \gamma_n - 2\gamma_{n-1} . \qquad (14)$$

where var $(\nabla\hat{\gamma}_n)$ is an estimate of the variance of $\nabla\hat{\gamma}_n$ :

$$\text{var}\,(\nabla\hat{\gamma}_n) = \frac{10}{3\Delta t_n}\,(\gamma_{n+1} \div \gamma_n \div \gamma_{n-1}) . \qquad (15)$$

To justify the decision rule of equation (13) one may note that, under the assumption of homogeneity in the depth interval (n - 1, n + 2), the probability of the occurence of the inequality defined by that equation is greater than 0.99.

Apart from some minor modifications, this filter should provide edequate solution to the anti-correlation problem. However, the results are not fully satisfactory. The major shortcoming is the occasional poor repeatability of the resultant Th, U, K log in the vicinity of transition zones. The following explanation may be given : to keep an acceptable resolution the transition filter must have a large gain $K_t$ which can result in substantial errors ; moreover, when the switch to the homogeneous filter with its small gain $K_h$ is undertaken an initial erroneous estimate causes too long a time for the filter to stabilize to the correct mean value.

To reduce the effect of these problems, a better knowledge of $K_n$ around transition zones is needed and this can only be achieved through an explicit modeling of the Th, U, K vertical distribution.

The well-known limitation of the applicability of the classical Kalman filtering theory to real world problems is that the dynamical model of the process to be estimated must be completely specified in advance. Unfortunately, such a model does not exist at present. Therfore, in accordance with the present invention an adaptive Kalman filter is proposed which is based on the identification of the simplest possible model which reasonably describes the Th, U, K vertical distribution and the determination of the unknown underlying parameters of the model from the observation process $Z_n$. The filter itself will involve an estimation of the process $X_n$ from the process $Z_n$, using a fixed-lag smoothing algorithm.

As will be discussed hereinafter in more detail, a good candidate among the simplest models to describe the Th, U, K vertical distribution is the following random walk model :

$$X_{n+1} = X_n + W_n ,  \qquad (16)$$

where the sequence $W_n$ is a zero-mean Gaussian white noise, whose covariance matrix will be denoted by $Q_n$; by definition we have

$$Q_n = E(W_n W'_n) .  \qquad (17)$$

Equation (16) will be subsequently referred to as the "system" equation and is based according to the present invention on the following rationale. First, the homogeneous zones described hereinbefore correspond naturally to the levels n where $Q_n$ is "small". Note that Q will not be taken equal to the null matrix in homogeneous zones, not only to follow slow gradational changes in the Th, U, K concentrations, but also to avoid the possible divergence of the filtering process. Second, the assumed Gaussian law of $W_n$ only apparently contradicts the following obvious constraint :

$$X_n \geq 0  \quad \text{for all n} .  \qquad (18)$$

In fact this simplifying assumption will keep the linearity of the filtering process with no real loss of performance.

Let us recall that the measured process $Z_n$ satisfies the following equation (assuming the Gaussian approximation of the law of $Z_n$) :

$$Z_n = H_n X_n + V_n ,  \qquad (19)$$

where $V_n$ is a zero-mean Gaussian white noise whose covariance matrix $R_n$ is given by equation (5). Clearly the processes $V_n$

and $W_n$ can be assumed to be independent. In equation (19), note that $H_n$ has been chosen to be depth-varying to take into account possible environmental corrections relating to the borehole, such as borehole diameter.

Without loss of generality, the process $Z_n$ can be supposed to be observed for all depths n in the interval $[0, M]$. To completely determine the probability distribution of the entire sequence $X_n$ which satisfy equation (16) the apriori statistical knowledge of $X_0$ must be specified. As $X_0$ will be generally unknown, it will be conveniently assumed that it is a zeron-means Gaussian random variable independent of the noises $W_n$ and $V_n$ and with a very large covariance matrix, denoted by $\Sigma_0$.

For the sake of clarity, the system and measurement equations are rewritten with their underlying statistical hypotheses :

$$X_{n+1} = X_n + W_n \qquad (0 \leq n \leq M), \qquad (20)$$

$$Z_n = H_n X_n + V_n \qquad (0 \leq n \leq M), \qquad (21)$$

where the initial state $X_0$ and the noises $W_n$ and $V_n$ are supposed to be zero-mean independent Gaussian processes, whose covariance matrices are respectively :

$$\Sigma_0 = E(X_0 X'_0), \qquad Q_n = E(W_n W'_n), \qquad R_n = E(V_n V'_n). \qquad (22)$$

As mentioned above, $\Sigma_0$, $Q_n$, and $R_n$ will be assumed to be known throughout this section. Thanks to the simplifications made so far, the system and measurement equations have the nice form of a Kalman filter model. We will denote by $\hat{X}_{n/p}$ the best estimate of $X_n$ given the observation of $Z_0$, $Z_1$, ..., $Z_p$. The covariance matrix of the error random variable $X_n - \hat{X}_{n/p}$ will be designated by $\Sigma_{n/p}$. If the minimum error criterions is chosen, $\hat{X}_{n/p}$ is the conditional expectation of Xn, given $(Z_0, Z_1, \ldots Z_p)$, denoted by :

$$\dot{X}_{n/p} = E(X_n / Z_0, Z_1, \ldots, Z_p). \qquad (23)$$

When the entire sequence $Z_n$ is used, the best estimate $\hat{X}_{n/M}$ is computationally very demanding. If N is large enough, there is no serious loss of performance to replace it by the fixed-lag smoothing estimate $\hat{X}_{n/n+N}$. In the following discussion it will be shown how $\hat{X}_{n/n+N}$ can be obtained from the standard Kalman filtering estimate $\hat{X}_{n/n}$.

The standard Kalman filter is then given by the following recursion :

a. Time – Update :

$$\dot{X}_{n/n-1} = \dot{X}_{n-1/n-1} , \qquad (24)$$

$$\Sigma_{n/n-1} = \Sigma_{n-1/n-1} + Q_{n-1} , \qquad (25)$$

b. Measurement – Update :

$$K_n = \Sigma_{n/n-1} H'_n (H_n \Sigma_{n/n-1} H'_n + R_n)^{-1} , \qquad (26)$$

$$\hat{X}_{n/n} = \dot{X}_{n/n-1} + K_n (Z_n - H_n \hat{X}_{n/n-1}) , \qquad (27)$$

$$\Sigma_{n/n} = (I - K_n H_n) \Sigma_{n/n-1} . \qquad (28)$$

where I is a (3 x 3) identity matrix.

It is interesting to compare this filtering to the one presented in equation (6). Equations (27) and (10) are formally the same but the gain $K_n$ is now recomputed at each depth instead of switching between two preset values. Moreover, the optimality of $K_n$ can be claimed whenever the system model is valid.

The fixed-lag smoothing estimate $\hat{X}_{n/n+N}$ is obtained using the following relationship :

$$\dot{X}_{n/n+N} = \hat{X}_{n/n} + \Sigma_{n/n-1}\left[\sum_{k=1}^{N}(I - K_{n+k}H_{n+k})'E_{n+k}\right]. \tag{29}$$

where $E_n$ designates the 3-dimensional normalized innovation process :

$$E_n = H'_n(H_n\Sigma_{n/n-1}H'_n + R_n)^{-1}(Z_n - H_n\hat{X}_{n/n-1}). \tag{30}$$

Remembering that $(H_n \Sigma_{n/n-1}H'_n + R_n)$ is a $(5 \times 5)$ dimensional matrix, it can be seen that the calculation of $H'_n(H_n\Sigma_{n/n+1}H'_n + R_n)^{-1}$ is the major factor in the determination of $\hat{X}_{n/n+N}$. It will be shown in the next paragraph how sequential processing, in accordance with principles of the present invention, can significantly reduce the computational requirements of the filtering.

The basic idea of sequential processing is to handle the measurement process one component at a time. If i designates some window index (i = 1, 2, ..., 5), let us then introduce the following quantity :

$$\hat{X}^i_{n/p} = E[X_n / (Z_0, Z_1, \dots, Z_{p-1}), Z^1_p, \dots, Z^i_p]. \tag{31}$$

Let $\Sigma^i_{n/p}$ denote the covariance matrix of the error $X_n - \hat{X}^i_{n/p}$. Clearly we have $\hat{X}^5_{n/p} = \hat{X}_{n/p}$ ; it is convenient also to set $\hat{X}^0_{n/p} = \hat{X}_{n/p-1}$. In the same way we have $\Sigma^5_{n/p} = \Sigma_{n/p}$ and $\Sigma^0_{n/p} = \Sigma_{n/p-1}$. In the sequel $H_n$ and $R_n$ will designate the $i_{th}$ row of $H_n$ and respectively the $i^{th}$ diagonal element of $R_n$. In the sequential Kalman filter processing, the time –update equation remains the same but the measurement up-date equation now splits into five iterations (i = 1, 2,..., 5) :

$$K^i_n = \Sigma^{i-1}_{n/n}(H^i_n)'[H^i_n\Sigma^{i-1}_{n/n}(H^i_n)' + R^i_n]^{-1}, \tag{32}$$

$$\hat{X}^i_{n/n} = \hat{X}^{i-1}_{n/n} + K^i_n(Z^i_n - H^i_n\hat{X}^{i-1}_{n/n}), \tag{33}$$

$$\Sigma^i_{n/n} = (I - K^i_n H^i_n)\Sigma^{i-1}_{n/n}. \tag{34}$$

The recursion is initialized by $\Sigma^o_{n/n} = \Sigma_{n/n-1}$ and $\hat{X}^o_{n/n} = \hat{X}_{n/n-1}$ and terminated by $\Sigma^S_{n/n} = \Sigma_{n/n}$ and $\hat{X}^S_{n/n} = \hat{X}_{n/n}$. The advantage of sequential processing is that the quantity $\left[ H^i_n \Sigma^{i-1}_{n/n} (H^i_n)' + R^i_n \right]$ is now a scalar. To obtain $X_{n/n+N}$ we use equation (29) as before. The feedback matrix $(I - K_n H_n)$ is computed via the identity :

$$I - K_n H_n = I - \Sigma_{n/n} H'_n R_n^{-1} H_n , \tag{35}$$

while the normalized innovation $E_n$ is given by :

$$E_n = \sum_{i=1}^{s} \left\{ \left[ \prod_{j=1}^{i-1} (I - K^j_n H^j_n)' \right] (H^i_n)' \left[ H^i_n \Sigma_{n/n-1} (H^i_n)' + R^i_n \right]^{-1} (Z^i_n - H^i_n \hat{X}^{i-1}_{n/n}) \right\} \tag{36}$$

(with the convention that the product in brackets is the identity matrix when i = 1).

Up till now it has been shown that, if the system and measurement equations (20) and (21) are valid and if $\Sigma_O$ and the two sequences $Q_n$ and $R_n$ are known, then the determination of the Th, U, K content is easily solved using a fixed-lag smoothing. Unfortunately, if the first assumption appears reasonable, the second one is quite unrealistic. This leads to the use of an adaptive Kalman filtering scheme, where $\Sigma_O$ and the sequences $Q_n$ and $R_n$ are to be estimated on-line from the available data (Zo, $Z_1$, ..., $Z_M$). This is relatively easy for $\Sigma_O$ and $R_n$. For $\Sigma_O$, any very large matrix would be appropriate. Although this can be further refined, the following unbiased estimate can be proposed for $R_n$ :

$$\hat{R}_n = \frac{1}{\Delta t_n} \text{diag} (Z_n) . \tag{37}$$

In fact, it follows from equation (4) that $EZ_n = HX_n$; hence, $E\hat{R}_n = R_n$ results from the application of equation (5). Therefore, the only remaining problem is to estimate

sequence $Q_n$. Remembering that the random walk model is not an absolute truth, the more fundamental problem is to find the "best" modeling for the Th, U, K vertical distribution.

It has already been observed that one of the simplest model reflecting the content of a Th, U, K in homogeneous and transition zones is the random walk :

$$X_{n+1} = X_n + W_n \, .$$

with a respectively small and a respectively large variance for $W_n$ in corresponding homogeneous and transition zones.

Nevertheless, for a more complete analysis it was felt that the white noise assumption for $W_n$ is perhaps too simple and that it would surely be more realistic to model $W_n$ as a "colored" noise. Guided by the general idea that the process cannot be used to estimate highly varying quantities of Th, U, K accurately (because of the Cramer-Rao bound), the following model has been investigated :

$$X_{n+1} = X_n + A_n f(n) \, , \qquad (38)$$

where $A_n$ is a slowly varying 3-dimensional random process, while $f(n)$ is an arbitrary scalar function. Using the measurement equation (2) and assuming for simplicity that H is constant between depths n and n + 1, we deduce from equation (38) that :

$$Z_{n+1} - Z_n = (H_n A_n) f(n) + (V_{n+1} - V_n) \, . \qquad (39)$$

Summing the five components and taking the mathematical expectations of both members of equation (39), one obtains that :

$$E(\gamma_{n+1} - \gamma_n) = k_n f(n) \, , \qquad (40)$$

where $k_n$ is a proportionality coefficient which, without loss of generality, can be assumed to be unity. When $(\gamma_{n+1} - \gamma_n)$ is large enough, as in transition zones. One may note that $f(n)$ can be approximated by $(\gamma_{n+1} - \gamma_n)$ itself. This shows that, roughly speaking, the estimation of $A_n$ and $f(n)$ is decoupled and that the five window spectral analysis is used to estimate the slowly varying process $A_n$ only.

Of course the nice model of equation (38) needs to be supported by some geological evidence. First, it will be appreciated that equation (38) is especially suited to model anomalies of one radioative element in an otherwise homogeneous background. For example, a uranium anomaly (whose detection and estimation are among the important tasks of radioactive prospecting is well represented by the following equation :

$$T_{n+1} = T_n, \quad U_{n+1} = U_n + a(\gamma_{n+1} - \gamma_n), \quad K_{n+1} = K_n, \qquad (41)$$

where a is the sum of the elements of the second column of $H_n$. More generally, equation (38) means that no "feature" can exist on the Th, U, K curves if it is not a result of a contribution to the gamma radiation.

Apart from this phenomenological reason, a more fundamental geological justification can be proposed : the ratios Th/K, Th/U, and U/K have been related to some sedimentological processes and Th/K is believed to be indicative of types of clays. Using equation (38), it can be easily shown that, if the ratios are constant on a given depth interval, then the process $A_n$ is constant on the same interval. Thus, the assumption that $A_n$ is slowly varying is a consequence of the homogeneity of the ratios. Knowing that a real log contains different sedimentological patterns, as determined from other logs, e.g., electrical logs, the best that can be assumed is that the ratios are locally homogeneous with some abrupt changes. To account for that precept, one has to refine equation (38) as follows :

$$X_{n+1} = X_n + A_n f(n), \qquad (42)$$

$$A_{n+1} = A_n + \nu \delta_n^T \qquad (43)$$

where T is the unknown time of an abrupt change and v is the vector representing the jump in $A_n$ at time T. Of course, equation (43) models only one abrupt change, but it is just a matter of bookkeeping to modify equation (43) to take into account serveral jumps.

As it may appear desirable to allow some abrupt changes for $X_n$ too, the following general model for the Th, U, K vertical distribution is proposed :

$$X_{n+1} = X_n + A_n f(n) + W_n + \mu \delta_{nT} ,\qquad (44)$$

$$A_{n+1} = A_n + U_n + \nu \delta_{nT} .\qquad (45)$$

where $\delta_{nT}$ is the Kronecker delta ; $\delta_{nT} = 0$ if $n = T$ and $\delta_{nT} = 1$ if $n = T$.

Here $U_n$ and $W_n$ are two zero mean independent Gaussian white noises with constant covariance matrices. These are chosen to be small to take into account unmodeled effects. The function $f(n)$ can be taken to be equal to some filtered derivative of the gamma ray which best estimates $E(\gamma_{n+1} - \gamma_n)$. Finally, T denotes the unknown time of an abrupt change in $X_n$ and (or) $A_n$ ; $\mu$ and $\nu$ designate the jumps in $X_n$ and $A_n$ at time T.

To test the validity of the model of equations (44) and (45), one may first neglect the problem of the unknown changes. The standard Kalman filtering therory can still be applied to estimate both $X_n$ and $A_n$ from the measurement process $Z_n$. The reason is that the dynamical system is conditionally linear, i.e., $f(n)$ is a known function subject to the observation of the process $Z_n$.

Since a goal of the present invention is the realization of a real-time filter and process, the "optimal" filtering techniques are presently too complicated because they would have to locate the aforementioned abrupt changes. Moreover, these techniques would have to estimate not only X but also A which is of lesser interest. With the presently available computing power it turns out that these techniques could only be implemented off-line. In the next paragraphs a detailed description is provided for a suboptimal filter which, in accordance with principles of the present invention, can provide an acceptable trade-off between complexity and performance.

Although it has no clear theoretical justification, the proposed filtering technique is an attempt to keep the simplicity of the random walk model while profiting from the Th, U, K model investigated in the preceding paragraph. More precisely, the technique will estimate $X_n$ using a fixed-lag smoothing based on the random walk model of equation (26). The unknown sequence $Q_n$ is to be determined by considering that model as an "approximation" of the model of equations (44) and (45).

Let us recall the equations of the model which will be assumed from now on :

$$X_{n+1} = X_n + W_n,$$   (46)

$$Z_n = H_n X_n + V_n,$$   (47)

where $W_n$ and $V_n$ are zero-mean independant Gaussian white noises. The fixed-lag smoothing based on this model has already been described. Throughout this paragraph, the covariance matrix $R_n$ of $V_n$ will be estimated by the diagonal matrix $\hat{R}_n$ whose $i^{th}$ diagonal element is given by

$$\hat{R}_n(i) = \max\left[.5, \frac{1}{\Delta t_n} Z_n^i\right].$$   (48)

This modification of equation (37) is simply to put a lower bound on R to avoid filter divergence. The covariance matrix $Q_n$ of $W_n$ will be assumed diagonal. The reasons for this are twofold : firstly, there exist no known prior correlations between the incremets of Th, U, and K and secondly, the estimation of the non-diagonal part of $Q_n$ would be unreliable because of the ill conditioning of the sensitivity matrix $H_n$.

If one assumes that the sequence $Q_n$ has been estimated up till level $n - 1$, then replacing the sequences $Q_m$ and $R_n$ by their estimates the Kalman filter defined by equations (24) to (28) can be implemented. This filter yields the estimate $\hat{X}_{m/m}$ for all $m \leqslant n$. Because of equation (46), it

0070943

is easy to see that, for all $k \geqslant 1$, the optimal prediction $\hat{X}_{n+k/n}$ of $X_{n+k}$ from the window count rates up till depth n is simply $\hat{X}_{n/n}$. Consequently, the optimal predictions of the window count rates and the gamma ray at level $n + k$ are then respectively :

$$\hat{Z}_{n+k/n} = H_{n+k} \hat{X}_{n/n} , \qquad (49)$$

$$\hat{\gamma}_{n+k/n} = \sum_{i=1}^{5} \hat{Z}_{n+k/n}^{i} . \qquad (50)$$

As explained above, we will now assume that the equation of the following form, which is just a slight modification of equation (38), is valid for all k between 1 and p :

$$X_{n+k} = \hat{X}_{n+k/n} + A (\gamma_{n+k} - \hat{\gamma}_{n+k/n}) , \qquad (51)$$

where A is some unknown (but deterministic) 3-dimensional vector. Let us designate by $\hat{A}$ the "best" estiamte (as defined below) of A from $\hat{X}_{n+k/n}$ and the window count rates ($Z_{n+1}$, $Z_{n+2}$, ..., $Z_{n+p}$). Viewing equation (46) as an approximation of equation (51), it is then "natural" to estimate the $i^{th}$ diagonal element of $Q^n$ by :

$$\hat{Q}_n (i) = (\gamma_{n+1} - \hat{\gamma}_{n+1/n})^2 \, \hat{A}_i^2 . \qquad (52)$$

where $\hat{A}_i$ designates the $i^{th}$ component of $\hat{A}$. The choice of p is important. On the one hand, p cannot be too small so as to have an acceptable effect on the accuracy of the determination of $\hat{A}$. On the other hand, p cannot be too large so as to adversely affect the validity of equation (51). Extensive testing on both simulated and real logs have shown that p = 6 appears to be a good trade-off and therefore this value will be assumed.

Let us return now to the estimation of A. From equations (47), (49), and (51), it follows that :

$$Z_{n+k} = \dot{Z}_{n+k/n} + H_{n+k} A (\gamma_{n+k} - \hat{\gamma}_{n+k/n}) + V_{n+k} , \quad (1 \leq k \leq 6) . \tag{52a}$$

Neglecting all the uncertainties in $\hat{Z}_{n+k/n}$ and $\gamma_{n+k}$, with respect ot those in $V_{n+k}$ the minimum variance estimate $\hat{A}$ of A is obtained by minimizing the following quadratic form of A :

$$\Phi (A) = \sum_{k=1}^{6} V_{n+k} \hat{R}_{n+k}^{-1} V'_{n+k} . \tag{53}$$

where $V_{n+k}$ is defined through equation (52). Straighforward computations show that

$$\hat{A} = P^{-1} L , \tag{54}$$

where L and P under are the 3-dimensional vector and the (3 x 3) symmetric positive definite matrix given respectively by

$$L = \sum_{k=1}^{6} (\gamma_{n+k} - \hat{\gamma}_{n+k/n}) H'_{n+k} \hat{R}_{n+k}^{-1} (Z_{n+k} - \dot{Z}_{n+k/n}) , \tag{55}$$

$$P = \sum_{k=1}^{6} (\gamma_{n+k} - \hat{\gamma}_{n+k/n})^2 H'_{n+k} \hat{R}_{n+k}^{-1} H_{n+k} . \tag{56}$$

Let us now make the two following comments on the procedure described above. Firstly, this procedure will make the filtering less sensitive to modeling errors than the optimal techniques based on the assumed correct model of equations (44) and (45). Secondly, the covariance matrix of A is the inverse of P. This shows that the estimation of A will not be reliable in these zones where the detected gamma ray spectrum has too low a signal-to-noise ratio and the noise on the gamma ray spectrum can no longer be safely neglected.

This basic problem dictates, therefore, the need of allocating each detected gamma ray level to homogeneous or transition zones.

It is to be emphasized that the zoning of the detected gamma ray is not an aim in itself, but only an intermediate step in the filtering process. Therefore there is a need to decide, at any given depth n, whether the detected gamma ray level is constant or not in a given neighborhood of n. Hence, it is natural to say that n belongs to a homogeneous zone if :

$$H_o: \quad E(\gamma_{n+k}) = a \quad (-m \leqslant k \leqslant m), \qquad .(57)$$

where a is an unknown constant, while m designates the size of the neighborhool of depth n.

To test $H_o$ one needs an alternative hypothesis ; more precisely, one has to model how a transition zone will appear on the gamma ray level. Because of the various convolution effects influencing the tool response, a parabolic model seems to simplest candidate to represent thin beds or sharp transition. Hence, we will set :

$$H_1: \quad E(\gamma_{n+k}) = b + ck + dk^2, \quad (-m \leqslant k \leqslant m), \qquad (58)$$

where b, c, and d are unknown constants. Standard Th, U, K data show that the tool responds to a spherical volume of matter having diameter of approximately 3 ft. This justifies the choice m = 3, which will be assumed hereafter.

To test $H_o$ against $H_1$, we will maximize the probability to correctly detect $H_1$ while constraining the probability of false alarms (we therefore choose $H_1$ when $H_o$ is true) to be less than a given small threshold, say . This dissymmetry of the roles of $H_o$ and $H_1$ is natural in as much as the estimation of $Q_n$ above has been proven unreliable in cases of a low signal-to-noise ratio of the gamma ray level. The two hypotheses being composite (because of the unknown parameters a, b, c, d), the generalized likelihood ratio test is the usual procedure to test $H_o$ againts $H_1$. Before describing the test, we need to introduce some notation.

Let $\gamma$ denote the vector $(\gamma_{n-3}, \gamma_{n-2}, \cdots, \gamma_{n+3})$. For i = 0, 1, let $\theta_i$ designate the set of all the unknown parameters in the law of $\gamma$ when $H_i$ is true. When $\theta_i$ is given, the likehood (i.e., the probability distribution) of $\gamma$ will be

denoted by $L(\gamma/\theta_i)$. The maximum likelihood estimate $\hat{\theta}_i$ of $\theta_i$ is then defined by :

$$L(\gamma/\hat{\theta}_i) \geqslant L(\gamma/\theta_i) \qquad (\forall \theta_i, \; i = 0, 1). \tag{59}$$

In the following discussion the quantity above will be simply written $L(\;/H_i)$.

The generalized likelihood ratio test is then :

"n belongs to a transition zone" :

$$\text{iff} \quad L(\gamma/H_1) \geqslant \lambda L(\gamma/H_0). \tag{60}$$

where $\lambda$ is chosen such that the probability of a false alarm is less than $\propto$. Because $(\Delta t_n \gamma_n)$ is a Poisson variable, the estimate $\theta_i$ is not easy to obtain. To save processing time, one computes $\theta i$ as if $\gamma_{n+}k$ was Gaussian with a constant variance. In this case, $\theta_1 = (\hat{b}, \hat{c}, \hat{d})$ is obtained by minimizing :

$$\sum_{k=-3}^{+3} (\gamma_{n+k} - b - ck - dk^2)^2. \tag{61}$$

Straightforward calculations lead to the following estimates :

$$\hat{a} = \frac{1}{7} u, \tag{62}$$

$$\hat{b} = \frac{1}{21} (7u - w), \tag{63}$$

$$\hat{c} = \frac{1}{28} v, \tag{64}$$

$$\hat{d} = \frac{1}{84} (w - 4u), \tag{65}$$

where u, v and w are respectively ( $\Sigma$ designates the sum from $k = -3$ to $k = 3$):

$$u = \Sigma \, \gamma_{n+k}, \quad v = \Sigma \, k\gamma_{n+k}, \quad w = \Sigma \, k^2 \gamma_{n+k}. \tag{66}$$

With the same idea of saving processing time, it is also convenient to compute the likehoods $L(\gamma/H_i)$ by replacning the law of $\gamma_{n+k}$ $(-3 \leqslant k \leqslant 3)$ by their Gaussian approximations whose variances will be both assumed equal to $\hat{a}/\Delta t_n$ (which is true for $H_0$ but is a rough approximation for $H_1$). In this case, taking the logarithms of equation (59), results in :

$$(w - 4u)^2 - 3v^2 \geqslant \mu u , \qquad (67)$$

where $\mu$ is a parameter to be adjusted to give the probability of false alarms $\alpha$.

To determine $\mu$ one may proceed as follows. since we want to compute the probability of inequality of equation (67) under the assumption that $H_0$ is true. In this case, one can approximate the law of $\gamma_{n+k}$ $(-3 < k < 3)$ by a Gaussian distribution with mean a and variance $a/\Delta t_n$ (assuming that $\Delta t_n$ is constant for all k such that $(-3 < k < 3)$). It is easy to check that $(w - 4u)$ and v will be two zero-mean, independent Gaussian variables whose variances are respectively $84a/\Delta t_n$ and $28a/\Delta t_n$. It is clear now that the random variable :

$$\xi - \frac{\Delta t_n}{84a} [(w - 4u)^2 + 3v^2] \qquad (68)$$

follows an $X^2$-distribution with two degrees of freedom. As $u/7a$ is very close to 1 when a is large enough, the probability of equation (67) is well approximated by :

$$\xi \geqslant \frac{\mu \Delta t_n}{12} \qquad (69)$$

The probability of inequality expressed in the above equation is given in statistical tables for every value of $\mu$. For example, $\mu \Delta$ results in a probability of false alarm of 1%. In this case the generalized likelihood ratio test is :

"n belongs to a transition zone"

$$\text{iff} \quad (w - 4u)^2 + 3v^2 \geqslant \frac{100 u}{\Delta t_n} , \qquad (70)$$

where u, v and w are defined in equation (66).

Finally, one may remark that since the size of the window (3 ft) will induce the test of equation (70) to choose a transition zone too early, the decision rule will be slightly modified to reduce this effect. The level n will be allocated to a transition zone iff inequality is satisfied for both depths n and n-1. It is to be noticed that this strategy will also decrease the rate of false alarms.

Having discussed the allocation of the detected gamma ray levels to respective zones, we now proceed to the application of the filter process. If it is assumed that the depth n + 1 has been allocated to a homogeneous zone. the estimation procedure described above for the next considered depth would not be reliable. To cure this problem, we make the simplifying assumption that $X_{n+1}$ is roughly equal to $X_n$ if the n + 1 depth belongs to a homogeneous zone. Extensive testing has shown that this assumption is quite acceptable. Owing to the foregoing assumptions, it is then justified to set:

$$\hat{Q}_n = Q_o , \tag{71}$$

where $Q_o$ is some predetermined "small" diagonal non-negative matirx. Moreover, a natural estimate of the covariance matrix $R_{n+1}$ is the diagonal matrix $\hat{R}_{n+1}$ whose $i^{th}$ diagonal element is :

$$\hat{R}_{n+1}(i) = \max\left[.5, \ \frac{1}{\Delta t_{n+1}} \ \hat{Z}_{n+1/n}^i\right]. \tag{72}$$

where $\hat{Z}_{n+1/n}$ denotes the $i^{th}$ component of $\hat{Z}_{n+1+n}$ defined by equation (49). It is to be noticed that $\hat{R}_{n+1}$ will have a much smaller variance than the estimate of equation (48).

We shall now consider the case where the depth n + 1 has been allocated to a transition zone. We will slightly modify the estimates $\hat{Q}_n$ and $\hat{R}_{n+1}$ given by equations (52) and (53) to decrease the complexity of the computation. Clearly the problem now amounts to finding more consistent estimates of A.
The crude approximation that :

$$H_{n+k} = H_{n+1}, \qquad (1 \leq k \leq 6) \tag{73}$$

is assumed when no factors for tool environmental corrections
have to be introduced. Owing to that simplification, one
deduces from equation (52) that :

$$E Z_{n+k} = E \hat{Z}_{n+k/n} + H_{n+1} A (E \gamma_{n+k} - E \hat{\gamma}_{n+k/n}), \tag{74}$$

which implies that :

$$\sum_{i=1}^{5} \sum_{j=1}^{3} H_{n+1}(i,j) A_j = 1 \tag{75}$$

where $H_{n+1}(i,j)$ designates the element of the $i^{th}$ row and $j^{th}$
column of the matrix $H_{n+1}$, while $A_j$ denotes the $j^{th}$ component
of A. It will be appreciated the respective contributions of
Th, U and K to the radiation spectrum are not independent, and
it results that only two of them (e.g., Th and K) will have to
be estimated, the third being given by the equation. It is to
be noticed that a new estimate of $\hat{A}$ will now involve the
solution of a (2 x 2) linear system instead of a (3 x 3) linear
system. The estimate of $Q_n$ being still given by equation (52).
For $R_{n+1}$ it is natural to use equation 51 to improve on the
estimate provided from equation (48) with the same notation as
equation (72) :

$$\hat{R}_{n+1}(i) = \max\left[ .5, \frac{1}{\Delta t_{n+1}} \left\{ \hat{Z}^i_{n+1/n} + B_i (\gamma_{n+1} - \hat{\gamma}_{n+1/n}) \right\} \right] \tag{76}$$

where $B_i$ designates the $i^{th}$ component of the 5-dimensional
vector B defined by :

$$B = H_{n+1} \hat{A} \tag{77}$$

The estimates of A given by the procedure above are not fully satisfactory everywhere. The main reason being the ill-conditioning of the sensitivity matrix, which may possibly be worsened in case of a relatively low signal-to-noise ratio of the gamma ray level. This problem can be cured once it is realized that the components of A are not distributed uniformly in $R^3$ or in some plane if the constraint of equation (75) is used. Clearly the only possibility is to intergrate into the filter process some geological knowledge about the Th, U, K vertical distribution.

A basic idea of the proposed method relies on the fact that only a few Th, U, K patterns can describe the true vertical profiles. So far the two following patterns have been used, but, of course more can be considered if necessary.

The first one corresponds to a pure uranium anomaly. It follows from equation (41) that $\hat{A}$ is given by :

$$\hat{A}' = (0, \frac{1}{a}, 0)' , \qquad (78)$$

where a is the sum of the elements of the second column of $H_{n+1}$.

The second pattern corresponds to the homogeneity of ratios conditions. Here one may assume that the three ratios Th/K, Th/u and U/K are constant between depths n and n + 1. Using the fact that the ratios at depth n can be estimated with the Kalman filter estimate $\hat{X}_{n/n}$, straightforward calculations show that $\hat{A}$ is given by :

$$\hat{A}' = \frac{1}{\hat{\gamma}_{n/n}} \left\{ \hat{X}_{n/n}^1 , \hat{X}_{n/n}^2 , \hat{X}_{n/n}^3 \right\}' \qquad (79)$$

where $\hat{X}_{n/n}^i$ (i = 1, 2, 3) designates the $i^{th}$ component of $\hat{X}_{n/n}$.

It is easy to compute the two likelihoods of the two preceding assumptions. The minus logarithms of the likehoods are precisely $\Phi(A)$ where A is replaced either by equations (78) or (79). The idea is then to use the estimate that will give the smallest value for $\Phi(A)$.

Unfortunately, things are more complicted inasmuch as the preceding models do not clearly exhaust all real cases. To cope with this problem, therefore, one should also compute the estimate minimizing equation (53) with no constraint that the components of A are all positive. Let us designate by $\phi$, $\phi_U$, $\phi_+$ and $\phi_R$, the values of $\phi$ (A) corresponding to the maximum likelihood estimates, the maximum likelihood estimate under positivity constraint, the pure uranium anomaly and the homogeneity of ratios condition respectively. Clearly we have :

$$\phi \leqslant \phi_+ \leqslant \phi_U \text{ and } \phi_R \qquad (80)$$

The basic idea is then to use the estimates of equations (78) or (79) only if $\phi_U$ and $\phi_R$ are not too far from $\phi$. If this is not the case, we compare $\phi$ and $\phi_+$. If $\phi_+$ is close enough to $\phi$, this means that real anti-correlations are doubtful and we then use the maximum likelihood estimate under positivity constraint. If not, it is then admitted that some real anti-correlations do exist and we use the usual maximum lielihood estimate is employed to derive the estimates of the contents.

With reference again to Figure 1, the output of the spectrum acquisitions buffer 16, comprising the counts in each of the five channels, is supplied to a high frequency filter 20 through an adder 21. The function of the adder 21 is to form from the counts of each of the respective windows the total gamma ray level. Subsequently, the high frequency filter 21 operates on the output of the adder 20 to supply a rate of change of the total gamma ray counts. Within the circuit arrangement 18 the zonning of the logged data into homogeneous and transition zones is accomplished in a circuit 22 which effects the zonning in accordance with a selected decision rule from the ones discussed above. The output of circuit 22, in turn, enables a filter operators generator 23 to select the desired filter operators which will effect the desired operation of a filter network 25. The filter network 25 additionally receives the output of the estimator network 24 so as to determine therefrom the Th, U, K content of the earth formations surrounding the borehole 2 at known depths. The results determined by arrangement 18 are thereafter supplied, along with the output of adder 21, to the plotter 19. Plotter 19 provides a graphic record comprising the determined Th, U, K contents along with the total gamma ray level arranged in a side-by-side manner relative to borehole depth.

Initially, the content of the formations in Th, U, K may be determined in arrangement 18, for a first depth level, in accordance with the above mentioned Moran et al technique employing a least squares analysis of the detected spectrum. For subsequent depths levels in homogeneous zones, the filter operators or parameters are such as to impose a continuity or "small variance" constraint on the determined content of the radioactive materials at different levels in the zone to reduce the anti-correlation relationship between the Thorium and Uranium contents. In transition zones, the content in Th, U, K may be determined by choosing filter operators, as discussed above, such as to maintain adequate resolution of the changes in the content of the radioactive materials along the borehole.

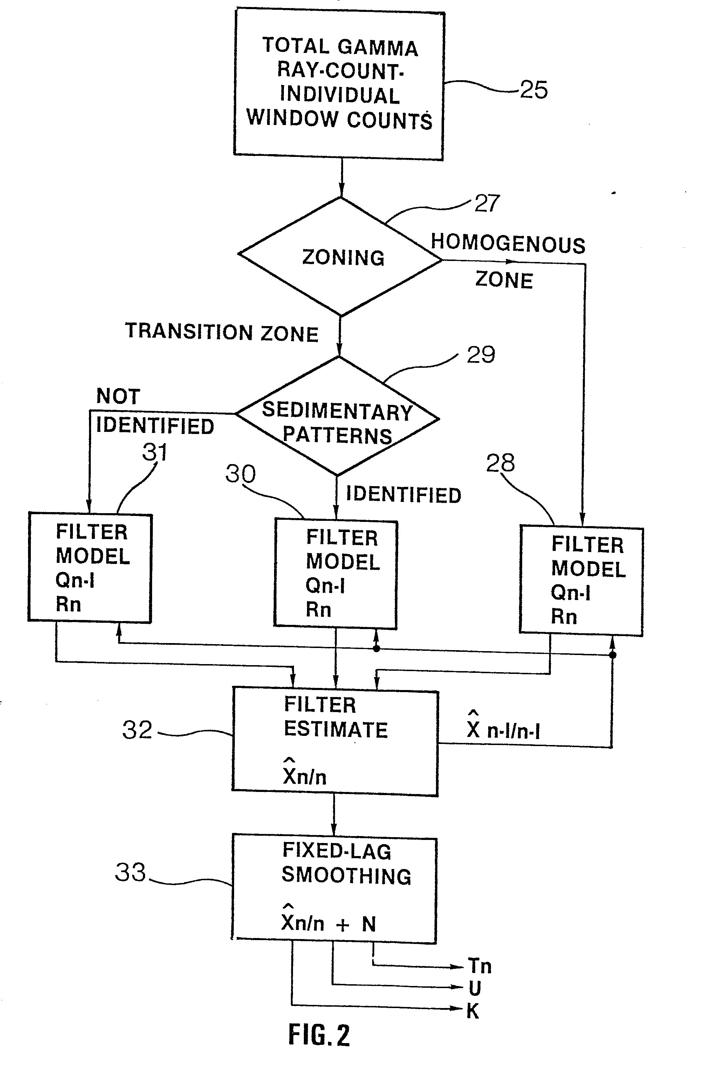

With reference to Figure 2, there is shown in block diagram form the process steps which represent an embodiment of the present invention. It will be appreciated that in describing the embodiment of Fig. 2, the exhaustive analysis of the process steps, described above, will not be repeated. Rather only the highlights of the process will be described in order to guide the reader in his understanding of the present invention.

For purposes of illustration we may assume that a detected radiant energy spectrum conveyed from buffer 16 (in Figure 1) is to be analyzed for the formation constituents contributing thereto. At step 26 these include the count rates for a series of adjacent depth including depths n-1 and n for each of the five windows, as well as the total radiation level as represented by the sum of the five windows at a given depth. In addition, a signal is provided representing the output of a high frequency filter 20 through which the signal representing the total gamma ray level is passed. On the basis of the output of that high frequency filter and in accordance with the decision rules concerning the zoning of depth intervals implemented at step 27, count rates for the five windows at level n are classified as belonging to a homogeneous or transition zone relative to the total gamma ray level for the preceeding depths levels. As a result of such zoning the window count rates are attributed to either a homogeneous zone or a transition zone.

Assuming the five windows counts are attributed to a homogeneous zone, at step 28, the window counts are applied to a filter network which determines the contributions of Th, U, K to the detected spectra in accordance with selected parameters chosen from one of the above described models, e.g., equation (16), for the determination of the content of the materials in a homogeneous zone.

If we now assume that the five window count rates are attributed to a transition zone, a further decision at step 29 may be undertaken. In accordance with a first choice the window count rates are applied at step 30 to a filter network which determines the contributions of Th, U, K to the detected spectra in accordance with selected parameters chosen from one of the above described models, e.g., equation (38). Yet with a second choice, assuming a certain knowledge of the Th, U, K vertical distribution, at step 31, the window counts are applied to a filter network which determines the contributions of Th, U, K to the detected spectra in accordance with selected parameters chosen from the model of equations (42) and (43). The Th, U, K estimates are then actually determined at step 32 through operation of the filter in accordance with the parameters chosen at step 29, 30 or 31. The output of the filter is in turn applied at step 33 to a fixed-lag smoothing operator which outputs the determined content in radioactive materials (e.g. Th, U, K).

In accordance with a preferred embodiment of the invention, as illustrated in Fig. 1, the sonde 1 through the mechanical operation of cable 3 is caused to move longitudinally through the boprehole 2. Simultaneously appropriate signals are sent downhole, through the telemetring and cable interface circuits 12 and 13, by the master programer 14 to effect control over the operations of sonde 1. In response to such signals a reference 15 transmits control signals to the PHA 10 to enable data acquisition through the time gating of PHA 10. The data detected by the radiation detector 6 and provided through PHA 10 is thereafter sent to the surface, via telemetering and cable interface circuits 12 and 13, where the counts in each of the five spectral windows are generated by respective portions of the data acquisition buffer 16.

Following accumulation in the acquisition buffer 16, the counts in each of the five windows are transferred to circuit arrangement 18. Circuit arrangement 18 may also receives the output of filter 20 which corresponds to the rate of change of the total gamma ray counts. Within the circuit arrangement 18, a simplified process is employed where a filter operator kn for depth n is generated from the total gamma ray count (TGR) for depth levels n and n-1 in accordance with the following rules :

$$c_n = a\, g\, \frac{|TGR_n - TGR_{n-1}|}{TGR_n + TGR_{n-1}} + (1- a)\, C_{n-1}$$

where   and g are constants :

  1) g = a single digit integer,
  2) $a$ = .8 if   $\dfrac{|TGR_n - TGR_{n-1}|}{TGR_n + TGR_{n-1}}$   $C_{n-1}$, i.e.

if cn is increasing, $a$ = .125 otherwise ; and kn is derived from cn by applying a truncation :

$$k_n = c_n \quad \text{if } 0.05 \leqslant c_n \leqslant 0.6$$
$$k_n = 0.05 \text{ if } c_n < 0.05$$
$$k_n = 0.6 \quad \text{if } c_n > 0.6$$

Thus the process of deriving the filter operator, in accordance with this embodiment of the invention introduces a dissymetry which causes a faster increase and a slower decrease in the value of cn and consequently of that of kn. By this process, the filter will react more rapidly when passing from a homogeneous zone to a heterogeneous zone than in the inverse direction to preserve resolution.

In this embodiment of the invention, following accumulation in the acquisition buffer 16, the counts in each of the five windows are transferred directly to respective storage buffers (not shown) in filter network 24 forming part of .arrangement 18. In filter network 24 the content of the logged formations in Th, U, K is determined, for a given depth level n, in accordance with the above mentioned Moran et al technique which employes a least squares analysis of the detected spectrum. The output of the estimator network 24 is thereafter supplied to filter 25 which effects the desired improvement in the Th, U, K estimates. Filter 25, in addition to receiving the outputs of estimator network 25 and filter operator generator 23, receives as feedback the Th, U, K values determined for the previous depth level n-1. The operation of filter 25 then follow the following rule :

$$X_n = (1 - k_n) X_{n-1} + kn \ X_n^*$$

where $X_n$ and $X_{n-1}$ are the three dimensional vectors describing the Th, U, K concentrations at the $n^{th}$ and $n^{th}-1$ depths respectively and $X_n^*$ is the 3 dimensional vector describing the Th, U, K concentrations as determined by the above mentioned Moran et al technique.

Of course it will be appreciated that the description of the apparatus of Figure 1 and the operating steps of Figure 2, effectively comprise the implementation of the various filtering methods as described above. These methods include the simpler models described, for example, in equation (6) where a simple continuity constraint is added in the case where the content of radioactive materials determined at a given depth is attributed to a homogeneous zone.

The present invention, of course, is not limited in its application to naturally radioactive amterials but is equally applicable to materials which are induced to be radioactive or those materials whose spectra can be determined by means other than radiation such as acoustic means.

CLAIMS

1.     Method for investigating subsurface earth formations along the length of a borehole traversing said formations so as to provide a record of the content of a selected number of radioactive materials in said formations, comprising the steps of :

passing through said borehole, means for detecting a radiation spectrum emitted by said selected materials, detecting at a known depth of the borehole representations of the radiation spectrum emitted,

combining said spectrum representations,

filtering the result of said combining step,

repeating said detecting, said combining and said filtering steps for adjacent depth of the borehole,

combining said spectrum representations to derive the content of the selected materials at successive depths,

identifying from the result of said filtering step depth intervals along the length of the borehole whereat the difference between the filtered output at one known depth relative to the filtered outputs at depths adjacent thereto is smaller than a given increment,

filtering the output of combining step relative to a prior computed content of the selected materials at an adjacent depth when said given depth and said adjacent depth belong to indentified depth intervals, and

providing a record of the output of the filtering step.

2.   A method in accordance with claim 1, wherein said first mentioned filtering step includes subjecting the result of said combining step to a high-pass filter.

3.   A method in accordance with claim 1, further comprising the step of constraining the results of said combining step in a manner such that the resultant determination of the content of a radioactive material not be negative.

4. A method in accordance with claim 1, further comprising the steps of :

identifying depth intervals where a physical characteristic of said earth formations is maintained through the interval, and

filtering the output of said combining step relative to a prior computed content of the selected materials at an adjacent depth when said given depth and said adjacent depth belong to the same identified interval.

5. A method in accordance with claims 1 through 4 wherein the materials being determined include potassium, uranium and thorium.

6. A method in accordance with claims 1 through 5 wherein in said detecting step, the detected spectrum representations are respectively related to a number of substantially contiguous windows into which the radiation spectrum is divided.

7. A method in accordance with claims 1 through 6 wherein the content of the radioactive materials as determined is recorded on a physical material relative to recorded representations of borehole depths.

8. Method for investigating subsurface earth formations along the length of a borehole traversing said formations so as to determine the content of a selected number of materials in said formations, comprising the steps of :

passing, through said borehole, means for detecting a radiation spectrum emitted by said selected materials,

detecting at a known depth of the borehole representations of the radiation spectrum emitted,

combining said spectrum representations to determine an observed content of the selected materials at said given depth,

modifying said observed content of the selected materials relative to the observed content of the selected materials at an adjacent depth as a function of the rate of change of the detected radiation spectrum,

providing a record of the modified, observed content of the selected materials as a function of borehole depth. .

9.    The method of claim 8, wherein said modifying step minimizes a variance error criterion of the observed content through a recursive processing technique.

10. The method of claim 8, wherein said modifying step minimizes a variance error criterion of the observed content through a sequential processing technique.

11. A method in accordance with claims 8 through 10 wherein the materials being determined include potassium, uranium and thorium.

12. A method in accordance with claims 8 through 10 wherein in said detecting step, the detected spectrum representations are respectively related to a number of substantially contiguous windows into which the radiation spectrum is divided.

13. Apparatus for investigating subsurface earth formations along the length of a borehole traversing said formations so as to determine the content of a selected number of materials in said formations, comprising the steps of :

a support member adapted for passing through said borehole,

means, mounted on said support member, for detecting a radiation spectrum emitted by said selected materials at a known depth of the borehole,

means for combining said spectrum representations to determine an observed content of the selected materials at said given depth,

means for modifying said observed content of the selected materials relative to the observed content of the selected materials at an adjacent depth, as a function of the rate of change of the detected radiation spectrum , and

means for providing a record of the modified, observed content of the selected materials as a function of borehole depth.

FIG.1

FIG. 2

European Patent Office

EUROPEAN SEARCH REPORT

**0070943**
Application number

EP 81 40 1249

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US - A - 2 050 600 (DRESSER INDUSTRIES INC.) <br> * Abstract; page 1, lines 1-17, 24-55, 94 - page 2, line 55; page 3, lines 3-53; figure 1 * | 1,5,6, 7,13 | G 01 V 5/06 |
| A | FR - A - 2 342 507 (SOCIETE DE PROSPECTION ELECTRIQUE SCHLUMBERGER) <br> * Page 1, line 1 - page 5, line 21; revendication 1 * | 1,4-7, 13 | |
| A | US - A - 4 187 908 (DRESSER INDUSTRIES INC.) <br> * Abstract; column 1, line 56 - column 2, line 36; column 3, line 17 - column 4, line 68 * | 1,4-7, 11-13 | TECHNICAL FIELDS SEARCHED (Int.Cl. 3) <br><br> G 01 V 5 |
| DA | US - A - 3 976 878 (SCHLUMBERGER TECH.CO.) <br> * Abstract; column 2, lines 17-64; column 3, line 15 - column 5, line 36; figures 1,2 * | 1,5,6, 7,13 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on. or after the filing date
D: document cited in the application
L: document cited for other reasons

&: member of the same patent family, corresponding document

| The present search report has been drawn up for all claims | | |
|---|---|---|
| Place of search <br> The Hague | Date of completion of the search <br> 22-03-1982 | Examiner <br> DATTA |

EPO Form 1503.1 06.78